# EUROPÄISCHE PATENTSCHRIFT

(11) **EP 0 297 667 B1**
(45) Veröffentlichungstag und Bekanntmachung des Hinweises auf die Patenterteilung: **22.09.1993**
(21) Anmeldenummer: 88201321.2
(22) Anmeldetag: 27.06.1988
(51) Int. Cl.: H04Q 7/04, B60R 11/02

(54) **Mobilfunkanlage**
Mobile radio equipment
Equipement de radio mobile

(30) Priorität: 02.07.1987 DE 3721806
(43) Veröffentlichungstag der Anmeldung: 04.01.1989
(73) Patentinhaber: Philips Patentverwaltung GmbH, 22335 Hamburg (DE); Philips Electronics N.V., 5621 BA Eindhoven (NL)
(72) Erfinder: Bardon, Hermann, D-8500 Nürnberg (DE); Macher, Ernst, D-8500 Nürnberg (DE)
(74) Vertreter: Peuckert, Hermann, Dipl.-Ing.

(56) Entgegenhaltungen:
- EP-A- 0 178 196
- DE-A- 2 618 701
- GB-A- 2 157 923
- PATENT ABSTRACTS OF JAPAN, Band 10, Nr. 197 (E-418)[2253], 10. Juli 1986 & JP-A-61 39 667
- PATENT ABSTRACTS OF JAPAN, Band 5, Nr. 91 (E-61), 13. Juni 1981 & JP-A-56 35 546

## Beschreibung

Die Erfindung betrifft eine Mobilfunkanlage, insbesondere eine Autotelefonanlage, bei der Funkteil und weitere Anlagenteile, wie Sprechhörer, Bedieneinrichtung und/oder Bedienhörer räumlich getrennt angeordnet und über Verbindungskabel miteinander verbunden sind, wobei zur Halterung von Sprechhörer bzw. Bedienhörer eine Hörerauflage vorgesehen ist.

Die Hauptbestandteile einer in einem Kraftfahrzeug eingebauten Mobilfunkanlage und zwar insbesondere einer Autotelefonanlage sind ein Funkteil, eine Antenne, eine Bedieneinrichtung und ein Sprechhörer. Für die Halterung des Sprechhörers im Kraftfahrzeug ist eine Hörerauflage vorgesehen, wobei der Sprechhörer über ein Kabel mit der Hörerauflage und diese über eine weitere Kabelverbindung mit dem Funkteil verbunden ist. Das Anschlußkabel für den Sprechhörer ist in der Regel ein elastisches Spiralkabel. Sprechhörer und Bedieneinrichtung können zu einem Bedienhörer vereinigt sein, indem die Tastatur und Anzeigemittel auf der Rückseite des Sprechhörers untergebracht sind.

Ist die in einem Kraftfahrzeug eingebaute Mobilfunkanlage mit einem Bedienhörer ausgestattet, so ist zwischen dem Bedienhörer bzw. der zugehörigen Hörerauflage und dem - gewöhnlich im Kofferraum des Personenkraftwagens montierten - Funkteil eine Kabelverbindung erforderlich. Dieses Kabel kann am Funkteil und an der Hörerauflage angesteckt sein und ist zu diesem Zweck auf beiden Seiten mit Steckverbindern abgeschlossen.

Ist stattdessen eine Ausstattung mit einem vom Sprechhörer getrennten Bedienteil gewählt, so ist vom Funkteil sowohl zum Sprechhörer bzw. zu dessen Hörerauflage als auch zur Bedieneinrichtung jeweils eine Kabelverbindung herzustellen. Dies kann in der Weise geschehen, daß sich das mit einer Steckverbindung am Funkteil angeschlossene Kabel im Fahrzeuginnenraum in zwei Kabelstränge aufteilt, wobei der eine dieser beiden Kabelstränge ebenfalls mittels einer Steckverbindung an der z.B. auf dem Mitteltunnel zwischen den Fahrzeugvordersitzen befestigten Hörerauflage und der andere Kabelstrang mittels einer weiteren Steckverbindung mit der z.B. im Armaturenbrett des Personenkraftwagens gehaltenen Bedieneinrichtung verbunden ist.

Als Grundausstattung eines für den späteren Einbau einer Autotelefonanlage in Frage kommenden Kraftfahrzeugs kann ein Kabel zwischen dem Einbauort für ein Funkteil im Kofferraum und dem Innenraum des Fahrzeuges vorgesehen werden, welches dann im Innenraum des Fahrzeuges entweder unmittelbar an der Hörerauflage für einen Bedienhörer angesteckt ist oder an einer Zwischensteckverbindung endet. An dieser ist ein erstes Kabel anschließbar, das mit der Hörerauflage für den Sprechhörer verbunden ist und die für die Funktionen des Sprechhörers erforderliche geringe Anzahl von Leitungen enthält. Ein weiteres an dieser Zwischensteckverbindung angeschlossenes Kabel enthält die für die Funktionen der Bedieneinrichtungen erforderlichen Leitungen und ist mit einem entsprechend vielpoligen Stecker versehen, mit dem es mit der Bedieneinrichtung verbunden wird. Schwierigkeiten treten auf, wenn auch andere Ausstattungsvarianten gewünscht werden oder nachträgliche Umrüstungen durchgeführt werden sollen, z.B. zusätzlich zu der ersten Sprechstelle eine weitere Sprechstelle im Fond des Wagens, welche gegebenenfalls noch eine zusätzliche Bedieneinrichtung erfordert, oder eine zusätzliche Ausstattung mit einem Bedienhörer im Fond des Wagens, so daß folgende Versionen vorstellbar sind:
1. Funkteil mit einem Bedienhörer
2. Funkteil mit zwei Bedienhörern
3. Funkteil mit Bediengerät und Sprechhörer
4. Funkteil mit Bediengerät und zwei Sprechhörern
5. Funkteil mit Bediengerät und Sprechhörer und einem zusätzlichen Bedienhörer
6. Funkgerät mit zwei Bediengeräten und zwei Sprechhörern
Der Erfindung liegt die Aufgabe zugrunde, ausgehend von einem im Rahmen der Grundausstattung des Fahrzeuges bereits vorgesehenen an beiden Enden mit Steckverbindern versehenen Kabel zwischen dem Einbauort für ein Funkteil im Kofferraum und einer geeigneten Stelle im Fahrzeuginnenraum die Mobilfunk-, insbesondere Autotelefonanlage der eingangs genannten Art so auszugestalten, daß ohne nachträgliche Änderungen an dem bereits in der Grundausstattung vorhandenen Kabel auf möglichst einfache und kostengünstige Weise eine Ausrüstung des Fahrzeuges mit einer beliebigen vom Kunden gewünschten Ausstattungsvariante sowie eine nachträgliche Umrüstung bzw. Nachrüstung in eine andere Ausstattungsvariante möglich ist.

Diese Aufgabe wird gemäß der Erfindung dadurch gelöst, daß der Funkteil mit einem beliebigen Anlagenteil verbunden und dieser ohne Festlegung einer bestimmten Reihenfolge mit weiteren Anlagenteilen beliebig verbindbar ist. Hierdurch wird erreicht, daß das vom Funkteil in den Fahrzeuginnenraum verlegte Kabel beispielsweise entweder mit einer Bedieneinrichtung und diese mit einer Hörerauflage oder mit einer Hörerauflage und diese mit der Bedieneinrichtung verbindbar ist. Dies hat insbesondere den Vorteil, daß für die jeweiligen Verbindungskabel je nach den konstruktiven Gegebenheiten des Kraftfahrzeugs die jeweils günstigste Verlegemöglichkeit auswählbar ist. Eine vorteilhafte Ausgestaltung besteht darin, daß die Hörerauflage und die Bedieneinrichtung identische und übereinstimmend beschaltete Steckverbinderanschlüsse aufweisen und diese jeweils paarweise vorhanden sind.

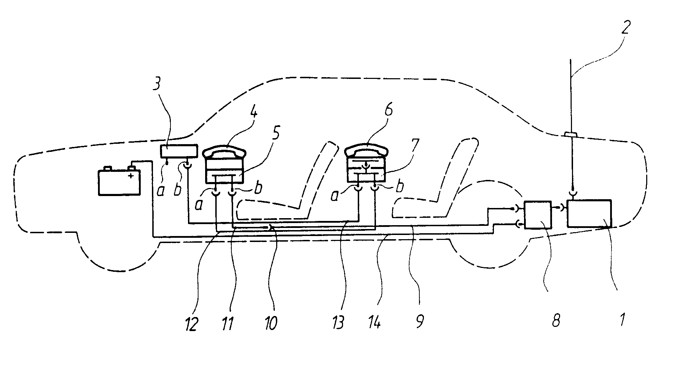

Im folgenden soll die Erfindung anhand eines in der Figur dargestellten Ausführungsbeispieles beschrieben werden.

In der Figur sind gestrichelt die Umrißlinien eines Kraftfahrzeuges angedeutet, in dem eine Mobilfunkanlage eingebaut ist, die im wesentlichen aus einem Funkteil 1 im Kofferraum, einer daran angeschlossenen Antenne 2 und weiteren Anlagenteilen besteht. Diese sind eine Bedieneinrichtung 3 und ein Sprechhörer 4 mit einer zugehörigen Hörerauflage 5 sowie ein Bedienhörer 6 mit zugehöriger Hörerauflage 7. An das Funkgerät 1 ist über einen Zwischenadapter 8 ein Verbindungskabel 9 angeschlossen, welches bereits bei der Herstellung des Kraftfahrzeugs als Grundausstattung vorgerüstet ist. Es endet mit einem Steckverbinder 10 an einer geeigneten leicht zugänglichen Stelle im Innenraum des Kraftfahrzeuges, im vorliegenden Fall am Mitteltunnel im Bereich zwischen den Vordersitzen.

Die Antenne 2 für die Mobilfunkanlage ist am Heck des Fahrzeuges befestigt und unmittelbar mit dem Funkteil 1 verbunden. Zur Stromversorgung der Mobilfunkanlage ist zwischen der Batterie im Motorraum und dem Funkteil das Kabel 14 vorgesehen, das am Zwischenadapter 8 angeschlossen ist. Die Verbindung zwischen dem Zwischenadapter 8 und dem Funkteil 1 erfolgt über eine einzige mehrpolige Steckverbindung. Über diese sind nicht nur die Verbindungen zur Bedieneinrichtung und zum Sprechhörer geführt, sondern auch noch die Stromversorgungsleitung. Diese Anordnung ermöglicht es, durch Lösen von nur zwei elektrischen Steckverbindern und einer Schnellspanneinrichtung das Funkteil aus dem Fahrzeug herauszunehmen und zur Umrüstung für den Betrieb als tragbare Anlage vorzubereiten.

In einer anderen Ausstattungsvariante des Funkteils ohne Zwischenadapter ist das Verbindungskabel 9 ebenso wie die tromversorgungsleitung 14 unmittelbar am Funkteil ansteckbar.

Am Steckverbinder 10 des zum Funkteil 1 führenden Verbindungskabels 9 ist ein Kabel 11 angeschlossen, das andererseits am Steckverbinder b der Hörerauflage 5 des Sprechhörers 4 angesteckt ist. Die Hörerauflage 5 ist beim Ausführungsbeispiel zwischen den Vordersitzen des Kraftfahrzeuges angeordnet. Sämtliche Anschlüsse des Steckverbinders b sind auch am Steckverbinder a der Hörerauflage 5 vorhanden, so daß es gleichgültig ist, ob das Verbindungskabel 11 am Steckverbinder a oder am Steckverbinder b angesteckt ist. Am Steckverbinder a ist im Ausführungsbeispiel ein weiteres Verbindungskabel 12 angesteckt, welches zu der im Fond des Kraftfahrzeuges angeordneten Hörerauflage 7 für den Bedienhörer 6 führt und an dieser am Steckverbinderanschluß b angesteckt ist. Auch diese Hörerauflage 7 ist mit einem weiteren mit dem Steckverbinderanschluß b identischen und elektrisch gleich beschalteten weiteren Steckverbinderanschluß a ausgerüstet. An diesem Steckverbinderanschluß a ist über das Verbindungskabel 13 die Bedieneinrichtung 3 im Armaturenbrett des Kraftfahrzeuges angeschlossen. Hier ist der Steckverbinderanschluß b verwendet, ebenso könnte der Steckverbinderanschluß a verwendet sein, der mit dem Steckverbinderanschluß b identisch und elektrisch gleich beschaltet ist.

Anstelle der im Ausführungsbeispiel gewählten Führung der Verbindungskabel könnte auch z.B. das vom Funkteil 1 kommende Kabel zunächst über ein Verbindungskabel mit der Bedieneinrichtung 3 verbunden sein, diese über ihren zweiten Steckverbinderanschluß und ein weiteres Verbindungskabel mit der Hörerauflage 5 für den Sprechhörer 4. Über ein drittes Verbindungskabel könnte die Hörerauflage 5 sodann mit der Hörerauflage 7 des Bedienhörers 6 im Fond des Kraftfahrzeuges verbunden sein.

Wie eingangs dargestellt, kann also abhängig von den konstruktiven Gegebenheiten die jeweils günstigste Möglichkeit für die Verlegung der Kabel ausgewählt werden und es ist auf einfache Weise möglich, Nachrüstungen und Umrüstungen vorzunehmen. Wäre bspw. die im Ausführungsbeispiel dargestellte Anordnung zunächst nur mit der Bedieneinrichtung 3 und der Hörerauflage 4 für den Sprechhörer 5 ausgerüstet, so wäre, um die Anlage mit dem Bedienhörer 6 und der zugehörigen Hörerauflage 7 nachzurüsten, lediglich ein zusätzliches Verbindungskabel zu verlegen, das an den jeweils zweiten Steckverbinderanschluß entweder an der Bedieneinrichtung 3 oder an der Hörerauflage 5 für den Sprechhörer 4 anzuschließen wäre.

Eine besonders vorteilhafte Ausführungsform ergibt sich, wenn für die Steckverbinder an den Kabeln besonders kleine Typen ausgewählt werden, so daß die nachträgliche Verlegung von Verbindungskabeln unter Abdeckungen und z.B. unter dem Teppichboden sowie durch Öffnungen von Karosserieteilen im Fahrzeuginnenraum erleichtert wird. Das Kabel 11, welches die Verbindung mit dem zum Funkteil 1 führenden Verbindungskabel 9 herstellt, ist dann auf einer Seite mit einem Steckverbinder auszurüsten, der zu dem serienmäßig am Verbindungskabel 9 angeordneten Stecker 10 paßt.

Die Steckverbinderanschlüsse a und b sind mit ihren geräteseitigen Anschlüssen auf einer Leiterplatte anlötbar, die Verbindung der Anschlußstifte untereinander sowie mit zu den Geräten weiterführenden Leitungen sind Leiterbahnen auf der Leiterplatte. Die Anordnung ist daher einfach und preiswert herstellbar, die erforderlichen Steckverbinderanschlüsse sind als preisgünstige Bauteile erhältlich.

Die Hörerauflage 7 für den Bedienhörer 6 weist beim Ausführungsbeispiel eine Adaptervorrichtung auf, was durch eine Zwischensteckverbindung in der schematischen Darstellung angedeutet ist. In diesem Fall genügt es, die paarweise vorhandenen Steckverbinder an der Adaptervorrichtung anzubringen. Die Hörerauflage selbst ist mittels entsprechender mechanischer Halteeinrichtungen mit der Adaptervorrichtung verrastet und mittels eines Steckverbinders mit dieser elektrisch verbunden. Es ist hierdurch auf einfache Weise möglich, den Bedienhörer, welcher ebenfalls über ein elastisches Spiralkabel mit der Hörerauflage fest verbunden ist, zusammen mit dieser aus dem Fahrzeug zu entnehmen und in ein anderes Fahrzeug umzusetzen.

## Patentansprüche

1. Mobilfunkanlage, insbesondere Autotelefonanlage, bei der Funkteil (1) und weitere Anlagenbestandteile wie Sprechhörer (4), Bedieneinrichtung (3) und/oder Bedienhörer (6) räumlich getrennt angeordnet und über Verbindungskabel (9, 11, 12, 13) miteinander verbunden sind, wobei zur Halterung von Sprechhörer (4) bzw. Bedienhörer (6) eine Hörerauflage (5, 7) vorgesehen ist, dadurch gekennzeichnet, daß der Funkteil (1) mit einem beliebigen Anlagenteil verbunden und dieser ohne Festlegung einer bestimmten Reihenfolge mit weiteren Anlagenteilen beliebig verbindbar ist.

2. Mobilfunkanlage nach Anspruch 1, dadurch gekennzeichnet, daß die Hörerauflage (5, 7) und die Bedieneinrichtung (3) identische und übereinstimmend beschaltete Steckverbinderanschlüsse (a, b) aufweisen und diese jeweils paarweise vorhanden sind.

## Claims

1. Mobile radio facility, especially a car telephone facility, in which the radio section (1) and further facility components, such as a micro-telephone (4), control panel (3) and/or portable telephone (6) are arranged spatially separated and are interconnected through junction cables (9, 11, 12, 13), a cradle (5, 7) being provided for holding the micro-telephone (4) or portable telephone (6) respectively, characterized in that the radio section (1) is connected to a part of the mobile radio facility and can be connected to any further parts of the facility without requiring a specific sequential order of such connections.

2. Mobile radio facility as claimed in Claim 1, characterized in that the telephone cradle (5, 7) and the control panel (3) have identical and correspondingly wired wiring terminals (a, b) and that the latter are available in pairs.

## Revendications

1. Equipement de radio mobile, en particulier équipement de radiotéléphone de voiture dans lequel, la radio (1) et d'autres pièces de l'équipement comme le combiné (4), le dispositif de commande (3) et/ou le combiné de commande (6) sont disposées à des endroits différents et reliées l'une à l'autre par des câbles de connexion (9, 11, 12, 13), un berceau de suspension (5, 7) étant prévu pour la fixation du combiné (4) ou du combiné de commande (6), caractérisé en ce que la radio (1) est reliée à un nombre quelconque de pièces de l'équipement et peut être reliée au choix à d'autres pièces de l'équipement sans qu'un ordre déterminé ait été établi.

2. Equipement de radio mobile selon la revendication 1, caractérisé en ce que le berceau de suspension (5, 7) et le dispositif de commande (3) présentent des connecteurs à fiches identiques et montés de la même manière (a, b) et en ce que ces derniers sont chaque fois présents par paire.
